# EUROPÄISCHE PATENTSCHRIFT

(11) **EP 2 414 694 B1**
(45) Veröffentlichungstag und Bekanntmachung des Hinweises auf die Patenterteilung: **29.05.2013**
(21) Anmeldenummer: 10708192.9
(22) Anmeldetag: 10.03.2010
(51) Int. Cl.: F16C 33/12, F16C 33/14

(54) **GLEITLAGERVERBUNDWERKSTOFF**
SLIDE BEARING COMPOSITE MATERIAL
MATÉRIAU COMPOSITE POUR PALIER LISSE

(30) Priorität: 31.03.2009 DE 102009002043
(43) Veröffentlichungstag der Anmeldung: 08.02.2012
(73) Patentinhaber: Federal-Mogul Wiesbaden GmbH, 65201 Wiesbaden (DE)
(72) Erfinder: SCHMITT, Holger, 64319 Pfungstadt (DE); ENGHOF, Thomas, 65201 Wiesbaden (DE); MEISTER, Daniel, 55246 Mainz-Kostheim (DE)
(74) Vertreter: Mehler Achler
(86) Internationale Anmeldenummer: PCT/EP2010/053035
(87) Internationale Veröffentlichungsnummer: WO 2010/112309

(56) Entgegenhaltungen:
- EP-A1- 1 541 263
- DD-A1- 241 635
- DE-C1- 10 055 037
- DE-T2- 69 317 215
- DE-T2- 69 520 456
- JP-A- 63 024 003
- US-A- 4 505 987
- US-A- 5 524 507
- US-B1- 6 676 704

## Beschreibung

Die Erfindung betrifft einen Gleitlagerverbundwerkstoff gemäß dem Oberbegriff des Patentanspruchs 1.

Die US 4,505,987 A offenbart einen Gleitlagerverbundwerkstoff, bei dem auf einem Stahlrücken eine gesinterte Metallschicht aufgebracht ist. Die gesinterte Metallschicht ist als eine Pulvermischung ausgeführt. Während des Sinterprozesses bildet ein Teil des Nickels mit Phosphor eine Nickel-Phosphor-Legierung aus.

Die DE 199 63 385 C1 beschreibt einen Gleitlagerverbundwerkstoff mit einer Trägerschicht, einer Lagermetallschicht, einer ersten Zwischenschicht aus Nickel und einer zweiten Zwischenschicht aus Zinn und Nickel sowie mit einer aus Kupfer und Zinn bestehenden Gleitschicht. Mit zunehmender Betriebsdauer nimmt die Dicke der Gleitschicht durch die Abwanderung des Zinns ab, was mit einer Aufkonzentration der Zinn-Kupfer-Partikel einhergeht. Gleichzeitig wächst auch die Dicke der Nickel-Zinn-Schicht an und die Nickelschicht nimmt ab. Die Diffusionseffekte treten erst unter Betriebsbedingungen auf und schaffen einen Eigenschaftsgradienten in dem auf der Lagermetallschicht befindlichen Schichtaufbau.

Aus der US 6,787,100 B2 ist ein Verfahren zum Herstellen eines Gleitlagers, das auf einem Stahlrücken ein Mehrschichtsystem aufweist, bekannt. Das herkömmliche Lagermaterial wird zum Beispiel durch ein im Wesentlichen bleifreies Zweischichtsystem ersetzt, wobei auf dem Stahlrücken zunächst eine erste Schicht aus einem kupferbasierten Metallpulver aufgebracht wird, die nicht verdichtet wird und auf diese Schicht ein kupferbasiertes Metallpulver mit anderer Zusammensetzung aufgebracht wird. Beide Schichten werden einem ersten Sinterschritt unterworfen, abgekühlt, verdichtet und dann einem zweiten Sinterschritt unterzogen. Die Metallpulver beider Schichten werden an ihre spezifischen Aufgaben durch Zugabe von weiteren Komponenten angepasst. Die erste Sinterschicht kann demnach aus einem Cu-Sn-Pulver und die zweite Schicht aus einem Cu-Sn-Bi-Pulver bestehen, wobei die erste Schicht dicker als die zweite Schicht ausgebildet ist. Durch diese Maßnahmen sollen z. B. bleihaltige Bronzen ersetzt werden.

Beide Schichten sind deutlich gegeneinander abgegrenzt und bilden allenfalls im Grenzflächenbereich zwischen den beiden Schichten eine dünne Übergangszone aus. Über die Partikelgrößen der Pulver werden keine Aussagen gemacht.

Aufgabe der Erfindung ist es, einen Gleitlagerverbundwerkstoff zu schaffen, der gute Gleiteigenschaften, eine möglichst hohe thermische Leitfähigkeit und eine gute Formanpassungs- bzw. Einbettfähigkeit besitzt.

Diese Aufgabe wird mit einem Gfeitlagerverbundwerkstoff gemäß des Patentanspruchs 1 gelöst. Der Gleitlagerverbundwerkstoff ist dadurch gekennzeichnet, dass die Lagermetallschicht vorzugsweise aus zwei nacheinander aufgebrachten Sinterschichten besteht, wobei die erste Sinterschicht mit einem ersten Pulvermaterial auf der Trägerschicht und die zweite Sinterschicht mit einem zweiten Pulvermaterial auf der ersten Sinterschicht aufgebracht ist, und wobei sich die Pulvermaterialien der Schichten unter Ausbildung eines Gradienten durchdringen.

Unter einer Gradientenschicht wird eine Schicht verstanden, deren Materialeigenschaften sich in Richtung senkrecht zur Trägerschicht kontinuierlich verändern.

Die Ausbildung eines Gradienten in der gesinterten Lagermetallschicht ermöglicht einen gleichmäßigen Übergang zwischen tragender und funktionalisierter Schicht. Die tragende Schicht ist die Trägerschicht, die beispielsweise aus einem Stahlrücken bestehen kann.

Die funktionalisierte Schicht ist eine auf der Lagermetallschicht befindliche Gleitschicht, wobei die Gradientenausbildung der gesinterten Lagermetallschicht auch die Möglichkeit eröffnet, die Lagermetallschicht mit zunehmendem Abstand von der Trägerschicht so auszugestalten, dass diese sehr gute Laufeigenschaften aufweist, so dass auf eine herkömmliche zusätzliche Gleitschicht verzichtet werden kann.

Vorzugsweise beträgt der Anteil der Gradientenschicht an der gesamten Lagermetallschicht mindestens 30 % der Dicke der Lagermetallschicht. Besonders bevorzugt sind 50 % und gemäß einer besonderen Ausführungsform ist die gesamte Lagermetallschicht als Gradientenschicht ausgebildet.

Vorzugsweise besteht die Lagermetallschicht aus einem bleifreien Material. Zum Einsatz kommen Pulvermaterialien wie z. B. Metalle, Legierungen und/oder keramische Materialien. Kunststoffmaterialien werden nicht eingesetzt.

Die Anzahl der aufgebrachten Schichten liegt vorzugsweise bei 2 bis 10 Schichten, wobei 2 bis 4 Schichten besonders bevorzugt sind.

Das Pulvermaterial der einzelnen Schichten wird jeweils aufgestreut, wobei mindestens das Pulvermaterial zweier Schichten nacheinander aufgestreut und gesintert wird. Wenn mehr als zwei Schichten aufgebracht werden, wird anschließend weiteres Pulvermaterial nacheinander aufgebracht und jeweils gesintert. Am Ende dieses Teils des Herstellungsvorgangs werden alle aufgebrachten Schichten gemeinsam verdichtet.

Die minimale Aufstreudicke pro Schicht liegt bei 0,05 mm und die Dicke der fertigen Lagerschicht beträgt vorzugsweise 0,2 bis 3 mm. Bei einer Dicke der Trägerschicht z. B. des Stahlrückens von 0,4 bis 4 mm liegt die Gesamtdicke des Gleitlagerverbundwerkstoffs bei 0,6 bis 7 mm.

Die Durchdringung der Pulvermaterialien der einzelnen aufgebrachten Schichten wird vorzugsweise durch die Partikelgröße gesteuert. So können beispielsweise kleine Partikel in die Zwischenräume zwischen großen Partikeln einer darunterliegenden Schicht eindringen. Je nach Ausbildung der Partikelgrößen kann die Dicke des Durchdringungsbereichs eingestellt werden.

Im einfachsten Fall von zwei Schichten wird auf eine Schicht aus beispielsweise grobkörnigem Material, d. h. einem Pulvermaterial mit großen Partikeln, eine zweite Schicht aus feinkörnigem Material, d. h. ein Pulvermaterial mit kleinen Partikeln aufgestreut, das vollständig in dem Material der ersten Schicht aufgenommen sein kann.

Außer dem mechanischen Eindringen in Zwischenräume tragen auch Diffusionseffekte beim Sintervorgang zu einer Durchdringung der Materialien bei.

Es wird auf diese Weise eine weitgehend homogene Lagermetallschicht gebildet, bei der die aufgebrachten Schichten aus unterschiedlichen Pulvermaterialien am Ende des Herstellungsvorgangs nicht mehr unterschieden werden können. Unter Pulvermaterial wird daher das aufgestreute Material verstanden.

Die Durchdringung oder Vermischung der einzelnen Schichten kann vollständig erfolgen oder nur teilweise unter Ausbildung von Schichtabschnitten, wobei die Schichtabschnitte größere Dicken aufweisen, als dies bei Grenzflächeneffekten von aufeinanderliegenden Schichten der Fall ist. Die Gewichtsanteile der Pulvermaterialien können sich kontinuierlich zwischen 0 und 100 Gew.-% für das eine Pulvermaterial bzw. von 100 bis 0 Gew.-% für das andere in dem ersten Pulvermaterial befindliche Pulvermaterial über die Gesamtdicke der Lagermetallschicht verändern.

Dies gilt für Pulvermaterialien insgesamt als auch für einzelne Pulverfraktionen der Pulvermaterialien.

Durch die Ausbildung von Gradientenschichten wird ein möglichst gleichmäßiger Übergang zwischen tragenden und funktionalisierten Schichten oder Schichtabschnitten gewährleistet.

Zwischen der Lagermetallschicht und der Trägerschicht kann beispielsweise zur besseren Anbindung der Lagermetallschicht an die Trägerschicht eine Pufferschicht vorgesehen sein, die vorzugsweise aus dem Pulvermaterial besteht, das den größten Gewichtsanteil an der Lagermetallschicht bildet.

Vorzugsweise weist das Pulvermaterial jeder Sinterschicht mindestens eine erste Pulverfraktion aus einem Matrixmaterial auf. Unter Matrixmaterial wird vorzugsweise dasjenige Material verstanden, das mindestens 50 Gew.-% des Pulvermaterials der jeweils aufgebrachten Schicht aufweist.

Obwohl der Begriff Matrixmaterial in Relation zu mindestens einem weiteren Material verwendet wird, kann das Pulvermaterial einer Schicht auch ausschließlich aus diesem Matrixmaterial bestehen, d. h. 100 Gew.-% an dem Pulvermaterial betragen.

Vorzugsweise besteht das Pulvermaterial jeder Sinterschicht nur aus Matrixmaterial, wobei die Matrixmaterialien aus demselben Material bestehen und sich die Matrixmaterialien in der Korngröße unterscheiden. Die Ausbildung des Gradienten wird ausschließlich über die Korngrößenunterschiede der beiden Pulvermaterialien von erster und zweiter Schicht eingestellt.

Vorzugsweise wird die erste Pulverfraktion aus Partikeln mit großer Korngröße oder aus Partikeln mit kleiner Korngröße gebildet.

Vorzugsweise nimmt der Anteil der kleinen Korngrößen in der Lagermetallschicht mit zunehmendem Abstand von dem Trägermaterial zu.

Die große Korngröße im Hinblick auf das Matrixmaterial umfasst einen Bereich mit mittleren Korngrößen im Bereich von ≥50 µm bis ≤200 µm. Wenn von kleinen Korngrößen gesprochen wird, so handelt es sich bei dem Pulvermaterial des Matrixmaterials um einen Bereich mit mittleren Korngrößen, die unter 50 µm liegen.

Vorzugsweise weist das Pulvermaterial mindestens einer Sinterschicht eine zweite Pulverfraktion aus mindestens einem Zusatzmaterial auf. Das Anforderungsprofil wird durch die Zugabe von mindestens einer zweiten Pulverfraktion umgesetzt, wobei auch bestimmte Oberflächen- bzw. Grenzflächeneigenschaften ausgebildet werden können, um z. B. gute Laufeigenschaften des Gleitlagerverbundwerkstoffs mit einer guten Bearbeitbarkeit zu kombinieren.

Es kann bei der Herstellung von Gleitelementen aus dem Gleitlagerverbundwerkstoff auf weitere Schichten, die durch andere Verfahren aufgebracht werden müssen, wie z. B. galvanische Schichten, verzichtet werden.

Vorzugsweise besteht die erste Pulverfraktion aller Schichten, die aus dem Matrixmaterial gebildet wird, aus demselben Matrixmaterial, wodurch Rissbildungen während des Sintervorgangs, z. B. bei unterschiedlichen Sinterbedingungen, verhindert werden.

Vorzugsweise besteht die erste Pulverfraktion der ersten Sinterschicht und/oder die erste Pulverfraktion der zweiten Sinterschicht aus großen Partikeln.

Gemäß einer weiteren Ausführungsform bestehen die erste Pulverfraktion der ersten Sinterschicht und/oder die erste Pulverfraktion der zweiten Sinterschicht aus kleinen Partikeln.

Gemäß einer weiteren Ausführungsform bestehen die zweite Pulverfraktion der ersten Sinterschicht und/oder die zweite Pulverfraktion der zweiten Sinterschicht aus großen Partikeln. Die großen Partikel der zweiten Pulverfraktion weist vorzugsweise mittlere Korngrößen von 70 bis 90 µm auf.

Es ist weiterhin bevorzugt, dass die zweite Pulverfraktion der ersten Sinterschicht und/oder die zweite Pulverfraktion der zweiten Sinterschicht aus kleinen Partikeln bestehen.

Eine weitere Unterscheidung der Partikel der zweiten Pulverfraktion betrifft deren Härtegrad.

Vorzugsweise bestehen die zweite Pulverfraktion der ersten Sinterschicht und/oder die zweite Pulverfraktion der zweiten Sinterschicht aus weichen Partikeln.

Es ist auch möglich, dass die zweite Pulverfraktion der ersten Sinterschicht und/oder die zweite Pulverfraktion der zweiten Sinterschicht aus harten Partikeln bestehen.

Zu den weichen Partikeln zählen solche z. B. aus h-BN oder C. Als harte Partikel kommen insbesondere solche aus c-BN, Al₂O3, Fe₃P, MoSi₂, SiO₂, Metallnitride, Metalloxide oder Metallsilizide in Frage.

Die weichen, großen Partikel der zweiten Pulverfraktion weisen vorzugsweise mittlere Korngrößen von 6 bis 8 µm auf.

Die harten, kleinen Partikel der zweiten Pulverfraktion weisen vorzugsweise mittlere Korngrößen im Bereich von 4 bis 6 µm auf.

Die erste Pulverfraktion, die das Matrixmaterial bildet, besteht vorzugsweise aus CuNiXSiX, CuSiXNiX, Cu, CuSnX und/oder CuFeXPX. Der Platzhalter x kann die Werte 1 bis 3 annehmen.

Vorzugsweise ist auf der Lagermetallschicht eine dünne Elementschicht aufgebracht. Diese Elementschicht kann aus den Elementen Cu, Sn, Bi, Ag, Au, Ni, In, Si oder deren Legierungen bestehen.

Durch das Aufbringen einer dünnen Schicht eines Elementpulvers auf die Metallschicht kann während des Sinters ein Eindiffundieren des Elementes in die Lagermetallschicht, z. B. Zinn in eine Kupfermatrix aufweisende Lagermetallschicht bewirkt werden. Es ist somit eine gezielte Funktionalisierung der gradierten Oberfläche möglich. Der Werkstoff kann optimal an das entsprechende Anforderungsprofil angepasst werden.

Vorzugsweise wird aus dem Gleitlagerverbundwerkstoff ein Gleitlagerelement hergestellt.

Die verschiedenen Kombinationsmöglichkeiten am Beispiel von zwei Schichten werden in der Tabelle 1 zusammengefasst. Bei mehr als zwei Schichten gilt ein entsprechendes Schema.

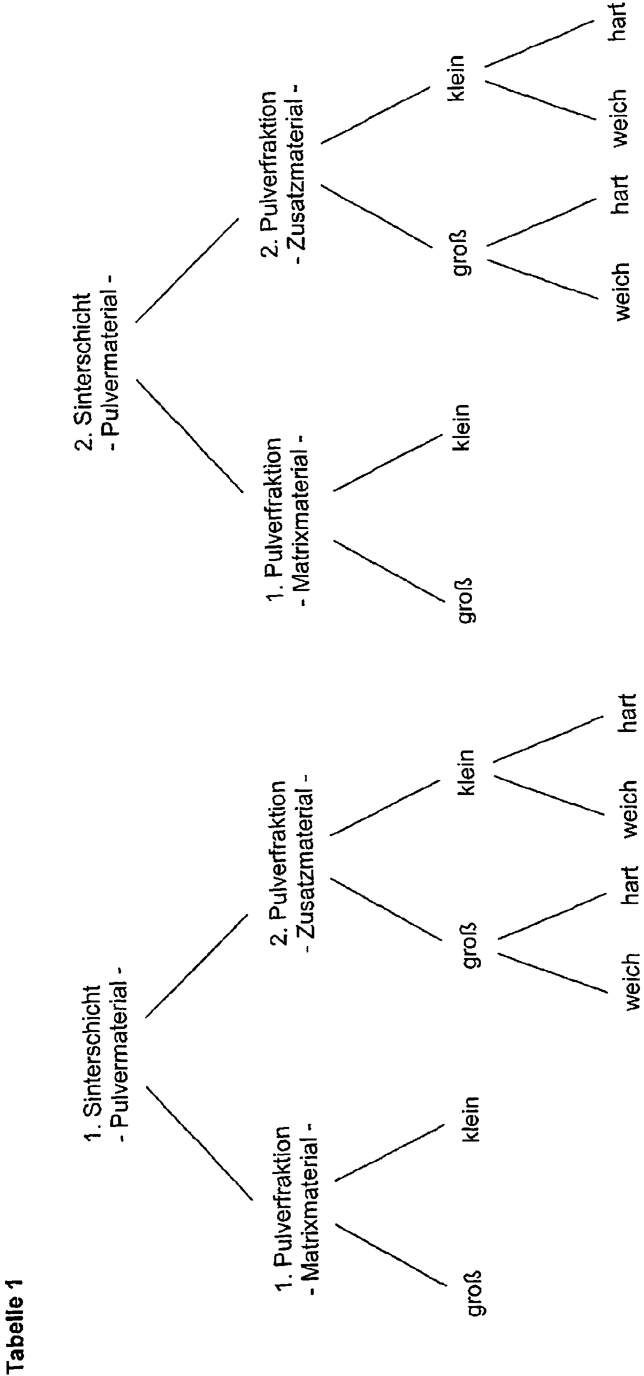

Von der Vielzahl der Möglichkeiten sind die 24 Kombinationen gemäß der Tabelle 2 besonders bevorzugt.

**Tabelle 2**

| **Beispiel Nr.** | **1. Sinterschicht** | | | | **2. Sinterschicht** | | | |
|---|---|---|---|---|---|---|---|---|
| | **Matrixmaterial** | | **Zusatzmaterial** | | **Matrixmaterial** | | **Zusatzmaterial** | |
| | **G** | **K** | **G** | **K** | **G** | **K** | **G** | **K** |
| 1 | x | | | H | x | | W | |
| 2 | x | | | H | x | | | W |
| 3 | x | | W | | x | | | H |
| 4 | x | | | | | x | | |
| 5 | x | | | | | x | | H |
| 6 | x | | | | | x | | W |
| 7 | x | | | | | x | W | |
| 8 | x | | | | x | | W | |
| 9 | x | | | | x | | | W |
| 10 | x | | | | x | | | H |
| 11 | | x | W | | ' | x | | |
| 12 | | x | W | | | x | | H |
| 13 | | x | W | | | x | | W |
| 14 | | x | | | | x | W | |
| 15 | | x | | | x | | W | |
| 16 | | x | | | x | | | W |
| 17 | | x | | | x | | | H |
| 18 | | x | W | | | x | | |
| 19 | | x | W | | | x | | H |
| 20 | | x | W | | | x | | W |
| 21 | | x | W | | | x | W | |
| 22 | | x | | H | | x | | W |
| 23 | | x | | H | x | | W | |
| 24 | | x | | H | x | | | H |

| | | | | | | | | |
|---|---|---|---|---|---|---|---|---|
| G = groß K = klein x = vorhanden W = weich H = hart | | | | | | | | |

Bei dem ersten Beispiel ist die erste Schicht hart, was durch eine Dispersionshärtung erreicht werden kann. Die zweite Schicht weist eine gute Dämpfung durch die großen weichen Zusatzstoffe auf.

Im zweiten Beispiel entspricht die erste Schicht der ersten Schicht des ersten Beispiels, wobei die zweite Schicht gute Schmiereigenschaften durch die feinteiligen weichen Zusatzstoffe aufweist.

Im dritten Beispiel weist die erste Schicht eine gute Dämpfung auf, während die zweite Schicht hart ausgebildet ist.

Das vierte Beispiel umfasst ausschließlich Matrixmaterialien in der ersten und zweiten Schicht. Weitere Zusätze sind hier nicht vorgesehen. Die Unterscheidung zwischen den beiden Pulvermaterialien erfolgt über die Korngrößenverteilung.

Das fünfte Beispiel weist eine erste Schicht ohne Zusätze und eine zweite harte Schicht auf.

Die Beispiele 6 bis 10 betreffen eine erste Schicht ohne Zusätze, wobei die zweite Schicht entweder gute Schmierungseigenschaften und/oder gute Dämpfungseigenschaften (Beispiele 7 und 8) aufweist.

Das neunte Beispiel weist eine sehr gute Schmierung der zweiten Schicht und eine große Härte der zweiten Schicht auf.

Im Beispiel 11 zeichnet sich die erste Schicht durch eine gute Dämpfung und die zweite Schicht, die keine Zusätze aufweist, durch eine höhere oder niedrigere Wärmeleitfähigkeit aus.

Im zwölften Beispiel weist die erste Schicht ebenfalls eine gute Dämpfung auf, während die zweite Schicht eine größere Härte besitzt.

Die Verwendung von konträren Korngrößen bei den ersten Pulverfraktionen führt zu einem chemischen Gradienten zwischen den Schichten. Bei gleichen Korngrößenverteilungen der ersten Pulverfraktionen ist der Gradient über die chemischen Eigenschaften der zweiten Pulverfraktionen einstellbar.

Es ist bevorzugt, in allen Schichten lediglich harte kleine Partikel der Zusatzstoffe zu verwenden.

Der Einsatz von großen harten Zusatzpartikeln ist zwar möglich, aber in der Regel nicht zweckmäßig, weil dadurch das Matrixmaterial zu stark geschwächt werden könnte.

Beim Einsatz von großen weichen Zusatzpartikeln wird die Dämpfungswirkung des gesamten Gleitlagerverbundwerkstoffs verbessert.

Der Einsatz von kleinen weichen Zusatzpartikeln in einer unteren Schicht ist nicht sinnvoll, weil die Festschmierstoffwirkung sich dort nicht entfalten kann.

Beispielhafte Ausführungsformen der Erfindung werden nachfolgend anhand der Figuren näher erläutert.

Es zeigen:
- Figur 1: einen schematischen Schnitt durch einen Gleittagerverbundwerkstoff gemäß einer ersten Ausführungsform,
- Figuren 2+3: Schnitte durch Gleitlagerverbundwerkstoffe gemäß einer zweiten und dritten Ausführungsform.

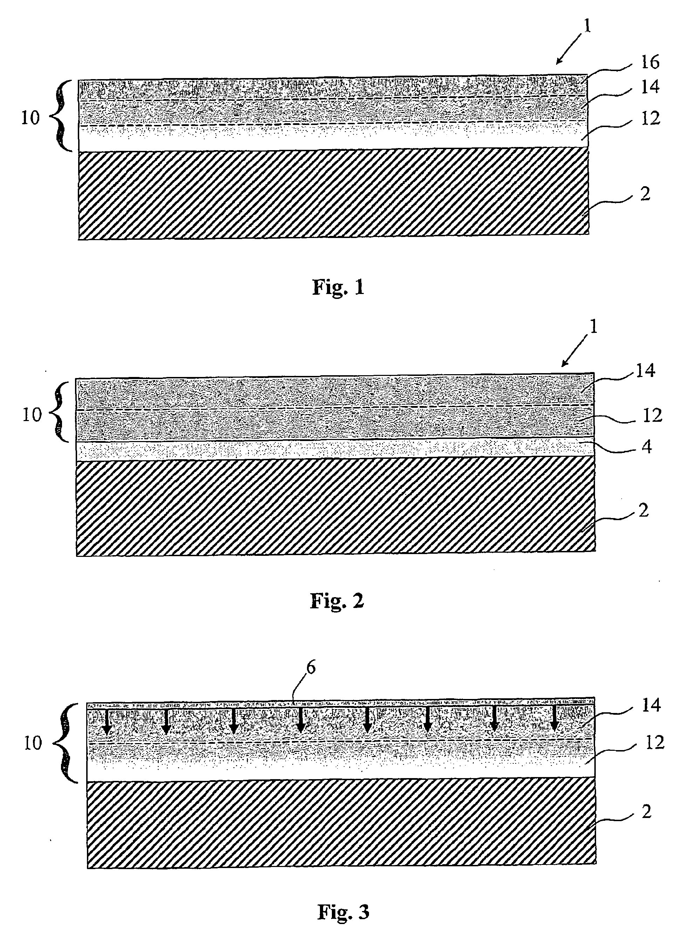

In der Figur 1 ist ein Gleitlagerverbundwerkstoff 1 dargestellt, der einen Stahlrücken 2 aufweist, auf dem eine Lagermetallschicht 10 aufgebracht ist, die insgesamt als Gradientenschicht ausgebildet ist. Gebildet wird diese Lagermetallschicht 10 aus drei einzelnen Sinterschichten 12, 14 und 16. Da die einzelnen Schichten am Ende des Herstellungsvorgangs nicht mehr zu differenzieren sind, sind die Trennlinien zwischen den Schichten lediglich gestrichelt eingezeichnet.

In der Figur 2 ist eine weitere Ausführungsform dargestellt, wobei die Lagermetalischicht 10 lediglich aus zwei Schichten 12 und 14 besteht, wobei zwischen der Lagermetallschicht 10 und dem Trägermaterial 2 eine Pufferschicht 4 angeordnet ist. Wenn das Matrixmaterial der Lagermetallschicht 10 beispielsweise aus CuSn8Ni besteht und als zweite Pulverfraktion ein Festschmierstoffmittel aufweist, ist es bevorzugt, die Pufferschicht 4 aus diesem Matrixmaterial CuSn8Ni zu bilden, um die Anbindung an den Stahlrücken 2 zu verbessern.

In der Figur 3 ist eine weitere Ausführungsform dargestellt, bei der ebenfalls zwei Schichten zur Herstellung der Lagermetallschicht 10 verwendet wurden. Auf der Oberfläche der oberen zweiten Schicht ist eine Elementschicht 6 aufgebracht, die während des Sintervorgangs in den oberen Teil der Schicht 14 eindringen kann. Es wird dadurch ein zusätzlicher Gradient dieses Elements in der oberen Schicht ausgebildet, wobei die Schichten 12 und 14 aufgrund der unterschiedlichen Pulverfraktionen ebenfalls einen Gradienten aufweisen.

### Bezugszeichenliste

| | |
|---|---|
| 1 | Gleitlagerverbundwerkstoff |
| 2 | Trägerschicht |
| 4 | Pufferschicht |
| 6 | Elementschicht |
| | |
| 10 | Lagermetallschicht |
| 12 | erste Sinterschicht |
| 14 | zweite Sinterschicht |
| 16 | dritte Sinterschicht |

## Patentansprüche

1. Gleitlagerverbundwerkstoff, der mindestens eine als Stahlrücken ausgebildete Trägerschicht (2) und eine gesinterte Lagermetallschicht (10) aufweist, wobei die gesinterte Lagermetallschicht (10) mindestens in einem Schichtabschnitt als Gradientenschicht ausgebildet ist, **dadurch gekennzeichnet, dass** die Lagermetallschicht (10) mindestens aus zwei nacheinander aufgebrachten Sinterschichten (12, 14, 16) besteht, wobei die erste Sinterschicht mit einem ersten Pulvermaterial auf der Trägerschicht (2) und die zweite Sinterschicht mit einem zweiten Pulvermaterial auf der ersten Sinterschicht aufgebracht ist, und dass sich die Pulvermaterialien der Schichten unter Ausbildung eines Gradienten durchdringen.

2. Gleitlagerverbundwerkstoff nach Anspruch 1, **dadurch gekennzeichnet, dass** der Anteil der Gradientenschicht mindestens 30 % der Dicke der Lagermetallschicht (10) beträgt.

3. Gleitlagerverbundwerkstoff nach einem der Ansprüche 1 oder 2, **dadurch gekennzeichnet, dass** die Lagermetallschicht (10) aus bleifreiem Material besteht.

4. Gleitlagerverbundwerkstoff nach einem der Ansprüche 1 bis 3, **dadurch gekennzeichnet, dass** das Pulvermaterial jeder Sinterschicht mindestens eine erste Pulverfraktion aus einem Matrixmaterial aufweist.

5. Gleitlagerverbundwerkstoff nach einem der Ansprüche 1 bis 4, **dadurch gekennzeichnet, dass** das Pulvermaterial jeder Sinterschicht nur aus Matrixmaterial besteht,
dass die Matrixmaterialien aus demselben Material bestehen, und
dass sich die Matrixmaterialien in ihrer Korngröße unterscheiden.

6. Gleitlagerverbundwerkstoff nach einem der Ansprüche 1 bis 5, **dadurch gekennzeichnet, dass** die erste Pulverfraktion aus Partikeln mit großer Korngröße oder mit kleinen Korngrößen bestehen.

7. Gleitlagerverbundwerkstoff nach Anspruch 6, **dadurch gekennzeichnet, dass** der Anteil der kleinen Korngrößen in der Lagermetallschicht (10) mit zunehmendem Abstand von der Trägerschicht (2) zunimmt.

8. Gleitlagerverbundwerkstoff nach einem der Ansprüche 1 bis 4, **dadurch gekennzeichnet, dass** das Pulvermaterial mindestens einer Sinterschicht mindestens eine zweite Pulverfraktion aus mindestens einem Zusatzmaterial aufweist.

9. Gleitlagerverbundwerkstoff nach Anspruch 4, **dadurch gekennzeichnet, dass** die erste Pulverfraktion der ersten Sinterschicht (12) und/oder die erste Pulverfraktion der zweiten Sinterschicht (14) aus großen Partikeln bestehen.

10. Gleitlagerverbundwerkstoff nach Anspruch 4, **dadurch gekennzeichnet, dass** die erste Pulverfraktion der ersten Sinterschicht (12) und/oder die erste Pulverfraktion der zweiten Sinterschicht (14) aus kleinen Partikeln bestehen.

11. Gleitlagerverbundwerkstoff nach einem der Ansprüche 8 bis 10, **dadurch gekennzeichnet, dass** die zweite Pulverfraktion der ersten Sinterschicht (12) und/oder die zweite Pulverfraktion der zweiten Sinterschicht (14) aus großen Partikeln bestehen.

12. Gleitlagerverbundwerkstoff nach einem der Ansprüche 8 bis 11, **dadurch gekennzeichnet, dass** die zweite Pulverfraktion der ersten Sinterschicht (12) und/oder die zweite Pulverfraktion der zweiten Sinterschicht (14) aus kleinen Partikeln bestehen.

13. Gleitlagerverbundwerkstoff nach einem der Ansprüche 8 bis 12, **dadurch gekennzeichnet, dass** die zweite Pulverfraktion der ersten Sinterschicht (12) und/oder die zweite Pulverfraktion der zweiten Sinterschicht (14) aus weichen Partikeln bestehen.

14. Gleitlagerverbundwerkstoff nach einem der Ansprüche 8 bis 13, **dadurch gekennzeichnet, dass** die zweite Pulverfraktion der ersten Sinterschicht (12) und/oder die zweite Pulverfraktion der zweiten Sinterschicht (14) aus harten Partikeln bestehen.

15. Gleitlagerelement aus einem Gleitlagerverbundwerkstoff gemäß Anspruch 1.

## Claims

1. A plain bearing composite material, which comprises at least one substrate layer (2) in the form of a steel backing and a sintered bearing metal layer (10), wherein the sintered bearing metal layer (10) is designed at least in one layer section as a gradient layer, **characterised in that** the bearing metal layer (10) at least consists of two consecutively applied sintered layers (12, 14, 16), wherein the first sintered layer is applied with a first powder material to the substrate layer (2) and the second sintered layer is applied with a second powder material to the first sintered layer, and **in that** the powder materials of the layers permeate each other to form a gradient.

2. A plain bearing composite material according to claim 1, **characterised in that** the proportion of the gradient layer amounts to at least 30% of the thickness of the bearing metal layer (10).

3. A plain bearing composite material according to any one of claims 1 and 2, **characterised in that** the bearing metal layer (10) consists of lead-free material.

4. A plain bearing composite material according to any one of claims 1 to 3, **characterised in that** the powder material of each sintered layer comprises at least one first powder fraction consisting of a matrix material.

5. A plain bearing composite material according to any one of claims 1 to 4, **characterised in that** the powder material of each sintered layer consists only of matrix material, the matrix materials consist of the same material and the matrix materials differ in their particle size.

6. A plain bearing composite material according to any one of claims 1 to 5, **characterised in that** the first powder fraction consists of particles with a large particle size or with small particles sizes.

7. A plain bearing composite material according to any one of claim 6, **characterised in that** the proportion of small particles sizes in the bearing metal layer (10) increases with increasing distance from the substrate layer (2).

8. A plain bearing composite material according to any one of claims 1 to 4, **characterised in that** the powder material of at least one sintered layer comprises at least one second powder fraction consisting of at least one additional material.

9. A plain bearing composite material according to claim 4, **characterised in that** the first powder fraction of the first sintered layer (12) and/or the first powder fraction of the second sintered layer (24) consists of large particles.

10. A plain bearing composite material according to claim 4, **characterised in that** the first powder fraction of the first sintered layer (12) and/or the first powder fraction of the second sintered layer (24) consists of small particles.

11. A plain bearing composite material according to any one of claims 8 to 10, **characterised in that** the second powder fraction of the first sintered layer (12) and/or the second powder fraction of the second sintered layer (14) consists of large particles.

12. A plain bearing composite material according to any one of claims 8 to 11, **characterised in that** the second powder fraction of the first sintered layer (12) and/or the second powder fraction of the second sintered layer (14) consists of small particles.

13. A plain bearing composite material according to any one of claims 8 to 12, **characterised in that** the second powder fraction of the first sintered layer (12) and/or the second powder fraction of the second sintered layer (14) consists of soft particles.

14. A plain bearing composite material according to any one of claims 8 to 13, **characterised in that** the second powder fraction of the first sintered layer (12) and/or the second powder fraction of the second sintered layer (14) consists of hard particles.

15. A plain bearing element consisting of a plain bearing material according to claim 1.

## Revendications

1. Matériau composite pour palier lisse, qui présente au moins une couche porteuse (2) réalisée sous forme de dos en acier et une couche frittée de métal pour palier (10), sachant que la couche frittée de métal pour palier (10) est réalisée, dans au moins une partie de couche, sous forme de couche à gradient, **caractérisé en ce que** la couche de métal pour palier (10) est constituée au moins de deux couches frittées (12, 14, 16) successivement apposées, sachant que la première couche frittée est apposée avec un premier matériau pulvérulent sur la couche porteuse (2) et que la deuxième couche frittée est apposée avec un deuxième matériau pulvérulent sur la première couche frittée, et **en ce que** les matériaux pulvérulents des couches s'interpénètrent en formant un gradient.

2. Matériau composite pour palier lisse selon la revendication 1, **caractérisé en ce que** la part de la couche frittée est égale à au moins 30 % de l'épaisseur de la couche de métal pour palier (10).

3. Matériau composite pour palier lisse selon la revendication 1 ou 2, **caractérisé en ce que** la couche de métal pour palier (10) est constituée de matériau sans plomb.

4. Matériau composite pour palier lisse selon l'une des revendications 1 à 3, **caractérisé en ce que** le matériau pulvérulent de chaque couche frittée présente au moins une première fraction pulvérulente d'un matériau de matrice.

5. Matériau composite pour palier lisse selon l'une des revendications 1 à 4, **caractérisé en ce que** le matériau pulvérulent de chaque couche frittée est constitué uniquement de matériau de matrice,
**en ce que** les matériaux de matrice sont constitués du même matériau,
et **en ce que** les matériaux de matrice se différencient par leur grosseur de grain.

6. Matériau composite pour palier lisse selon l'une des revendications 1 à 5, **caractérisé en ce que** la première fraction pulvérulente est constituée de particules de grande grosseur de grain ou de petite grosseur de grain.

7. Matériau composite pour palier lisse selon la revendication 6, **caractérisé en ce que** la part de petite grosseur de grain dans la couche de métal pour palier (10) augmente avec l'augmentation de la distance de la couche porteuse (2).

8. Matériau composite pour palier lisse selon l'une des revendications 1 à 4, **caractérisé en ce que** le matériau pulvérulent d'au moins une couche frittée présente au moins une deuxième fraction pulvérulente constitué d'au moins un matériau additif.

9. Matériau composite pour palier lisse selon la revendication 4, **caractérisé en ce que** la première fraction pulvérulente de la première couche frittée (12) et/ou la première fraction pulvérulente de la deuxième couche frittée (14) sont constituées de grandes particules.

10. Matériau composite pour palier lisse selon la revendication 4, **caractérisé en ce que** la première fraction pulvérulente de la première couche frittée (12) et/ou la première fraction pulvérulente de la deuxième couche frittée (14) sont constituées de petites particules.

11. Matériau composite pour palier lisse selon l'une des revendications 8 à 10, **caractérisé en ce que** la deuxième fraction pulvérulente de la première couche frittée (12) et/ou la deuxième fraction pulvérulente de la deuxième couche frittée (14) sont constituées de grandes particules.

12. Matériau composite pour palier lisse selon l'une des revendications 8 à 11, **caractérisé en ce que** la deuxième fraction pulvérulente de la première couche frittée (12) et/ou la deuxième fraction pulvérulente de la deuxième couche frittée (14) sont constituées de petites particules.

13. Matériau composite pour palier lisse selon l'une des revendications 8 à 12, **caractérisé en ce que** la deuxième fraction pulvérulente de la première couche frittée (12) et/ou la deuxième fraction pulvérulente de la deuxième couche frittée (14) sont constituées de particules molles.

14. Matériau composite pour palier lisse selon l'une des revendications 8 à 13, **caractérisé en ce que** la deuxième fraction pulvérulente de la première couche frittée (12) et/ou la deuxième fraction pulvérulente de la deuxième couche frittée (14) sont constituées de particules dures.

15. Élément de palier lisse constitué d'un matériau composite pour palier lisse selon la revendication 1.
